# EUROPEAN PATENT SPECIFICATION

(11) **EP 3 449 721 B1**
(45) Date of publication and mention of the grant of the patent: **17.02.2021**
(21) Application number: 17189304.3
(22) Date of filing: 05.09.2017
(51) Int. Cl.: A01K 35/00, A01K 11/00

(54) **WIRELESS POSITIONING BIRD LEG BAND HAVING OUTER ANTENNA STRUCTURE**
VOGELBEINBAND MIT ÄUSSERER ANTENNENSTRUKTUR ZUR DRAHTLOSEN POSITIONIERUNG
BAGUE À FIXER SUR LA PATTE D'UN OISEAU POUR UN REPÈRAGE SANS FIL ET AYANT UNE STRUCTURE D'ANTENNE EXTERNE

(43) Date of publication of application: 06.03.2019
(73) Proprietor: Min Xin Technology Corp., Taichung City 420 (TW)
(72) Inventor: KAO, Shu-Hui, Taichung City 420 (TW)
(74) Representative: Becker & Kurig Partnerschaft Patentanwälte PartmbB

(56) References cited:
- CN-U- 204 361 247
- CN-U- 205 305 703
- TW-U- M 512 901

## Description

### 1. Field of the Invention

The present invention relates to a bird leg band, and particularly to a wireless positioning bird leg band having an outer antenna structure.

### 2. Description of the Related Art

A migratory bird has capability of migration. A researcher may set a wireless positioning bird leg band on a leg of the migratory bird to keep track of the migration . The wireless positioning bird leg band may record path, speed, migration time, and retention time in a particular locale for studying the global climate. Further, since pigeons have capability for returning to their homes, pigeon racing becomes a popular sport. The wireless positioning bird leg bands may be mounted on legs of racing pigeons to record flying distances and flying speeds of the racing pigeons from the start point to the destination. Further, the flying distances and the flying speeds of the racing pigeons may be compared to determine which one of the racing pigeons return to the destination firstly.

A conventional wireless positioning bird leg band is minimized to be easily mounted on the leg of the bird without interfering with its flying. A wireless positioning device is mounted in the wireless positioning bird leg band. However, when the wireless positioning device receives or transmits wireless positioning signals, the wireless positioning signals may be shielded by a shell of the wireless positioning bird leg band. As a result, position, flying path, and flying speed determined by the wireless positioning signals may have errors. Therefore, the conventional wireless positioning bird leg band has the drawback of poor wireless positioning signals transmission.

As disclosed in CN publication No. CN205305703U entitled "Wireless locating foot ring", a wireless locating foot ring includes an arc casing, a wireless locating module, a first irradiator and a moving part. The arc casing has a first pin joint portion and a first block portion. The arc casing is inside to have an accommodation space with the wireless locating module of holding. The first irradiator is set up in the arc casing outside the rampart, and is electrically connected with the wireless locating module. The moving part and the arc casing pin joint make things convenient when a bird's foot detains the arc casing, and the moving part with the arc casing pin joint can prevent the foot ring from dropping from the bird's foot. In addition, the wireless locating module can launch or receive wireless signals through the first irradiator effectively, thereby improving wireless connection quality and positional accuracy.

An objective of the present invention is to provide a wireless positioning bird leg band having an outer antenna structure. Therefore, wireless positioning signals may be clearly received and transmitted to raise transmission capability and transmission quality of the wireless positioning bird leg band.

To achieve the foregoing objective, the invention provides a wireless positioning bird leg band according to independent claim 1, which includes an arc-shaped shell, a wireless positioning module, a flexible radiation unit, a movement unit, a flexible ground unit, and a conductive pivot. Preferred embodiments of the invention are set out in dependent claims 2-12.

The arc-shaped shell includes a first terminal, a second terminal, an inner annular wall, and an outer annular wall. The first terminal is opposite to the second terminal. The first terminal of the arc-shaped shell forms a first pivoting portion, and a portion of the inner annular wall near the second terminal forms a first engagement portion. The arc-shaped shell further includes an accommodating space and a battery slot, and the accommodating space communicates with the battery slot.

The wireless positioning module is mounted in the accommodating space. The wireless positioning module includes a first conductive unit and a second conductive unit, and the first conductive unit and the second conductive unit extend out of the outer annular wall of the arc-shaped shell.

The flexible radiation unit is mounted on the outer annular wall of the arc-shaped wall, and the flexible radiation unit includes a ground portion and an antenna portion. The ground portion and the antenna portion are respectively electrically connected to the first conductive unit and the second conductive unit.

The movement unit includes a first terminal and a second terminal, and the first terminal is opposite to the second terminal. The first terminal of the movement unit forms a second pivoting portion, and the second terminal of the movement unit forms a second engagement portion. The second pivoting portion pin-joints to the first pivoting portion. The second engagement portion selectively engages with the first engagement portion.

The flexible ground unit is mounted on a surface of the movement unit, and is electrically connected with the ground portion of the flexible radiation unit.

The conductive pivot includes a first terminal, a middle portion, and a second terminal. The middle portion is mounted between the first terminal and the second terminal of the conductive pivot. The first terminal and the second terminal extend in a first direction. The first pivoting portion of the arc-shaped shell and the second pivoting portion of the movement unit pivot to the first terminal of the conductive pivot, and the middle portion of the conductive pivot is electrically connected to the flexible radiation unit. The second terminal of the conductive pivot extends into an inside of the arc-shaped shell to be electrically connected to the wireless positioning module.

The flexible radiation unit is mounted on the outer annular wall of the arc-shaped shell, and may not be shielded by the arc-shaped shell. Further, the flexible radiation unit contacts the ground unit to be electrically connected to the ground unit. Therefore, a grounding area of the wireless positioning bird leg band is increased to provide better radiation capability. The wireless positioning module may clearly receive and transmit wireless signals to raise transmission capability and transmission quality of the wireless positioning bird leg band.

Further, when the movement unit is rotated to move the second engagement portion of the movement unit out of the first engagement portion of the arc-shaped shell, a bird leg may be easily put into the arc-shaped shell. Further, the first engagement portion of the arc-shaped shell is engaged with the second engagement portion of the movement unit. Therefore, the wireless positioning bird leg band may be easily mounted onto the bird leg.

Other objectives, advantages and novel features of the invention will become more apparent from the following detailed description when taken in conjunction with the accompanying drawings.

### IN THE DRAWINGS

Fig. 1 is a perspective view of a first embodiment of a wireless positioning bird leg band of the present invention;
Fig. 2 is an exploded view of the first embodiment of the wireless positioning bird leg band of the present invention;
Fig. 3 is a schematic view of an arc-shaped shell of the first embodiment of the wireless positioning bird leg band of the present invention;
Fig. 4 is a schematic view of a movement unit of the first embodiment of the wireless positioning bird leg band of the present invention;
Fig. 5 is a cross sectional view of the arc-shaped shell and the movement unit of the first embodiment of the wireless positioning bird leg band of the present invention;
Fig. 6 is another exploded view of the first embodiment of the wireless positioning bird leg band of the present invention;
Fig. 7 is schematic view of a flexible radiation unit of the first embodiment of the wireless positioning bird leg band of the present invention;
Fig. 8 is schematic view of a flexible ground unit of the first embodiment of the wireless positioning bird leg band of the present invention;
Fig. 9 is a schematic view of a second embodiment of the wireless positioning bird leg band of the present invention;
Fig. 10 is a bottom view of the second embodiment of the wireless positioning bird leg band of the present invention;

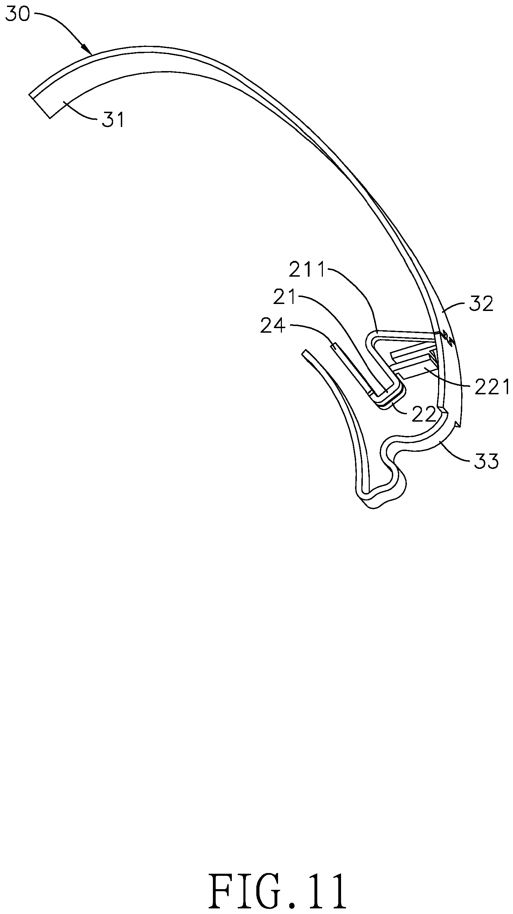

Fig. 11 is a top view of the second embodiment of the wireless positioning bird leg band of the present invention; and

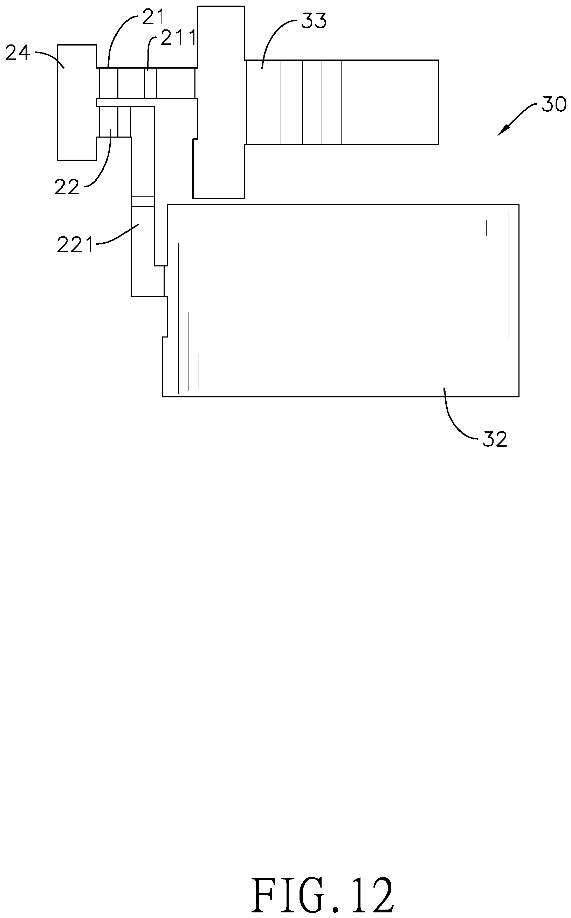

Fig. 12 is a schematic view of a first conductive unit, a second conductive unit, and a flexible radiation unit of the second embodiment of the wireless positioning bird leg band of the present invention.

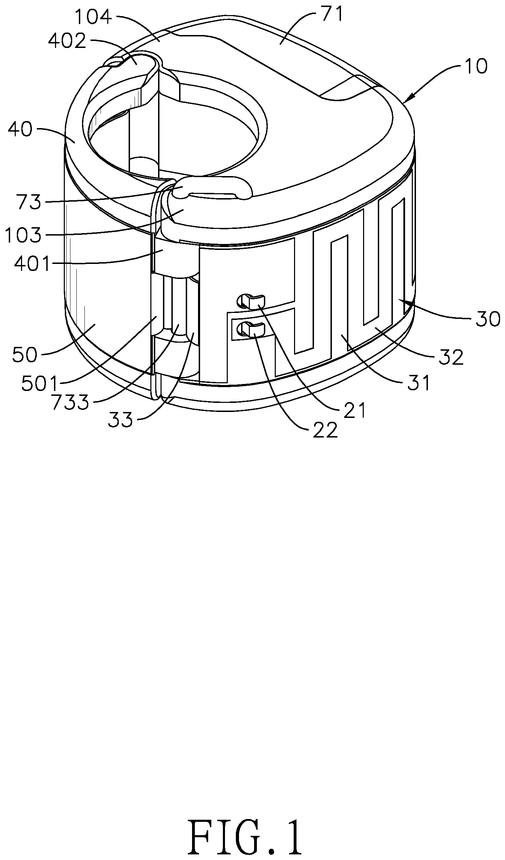

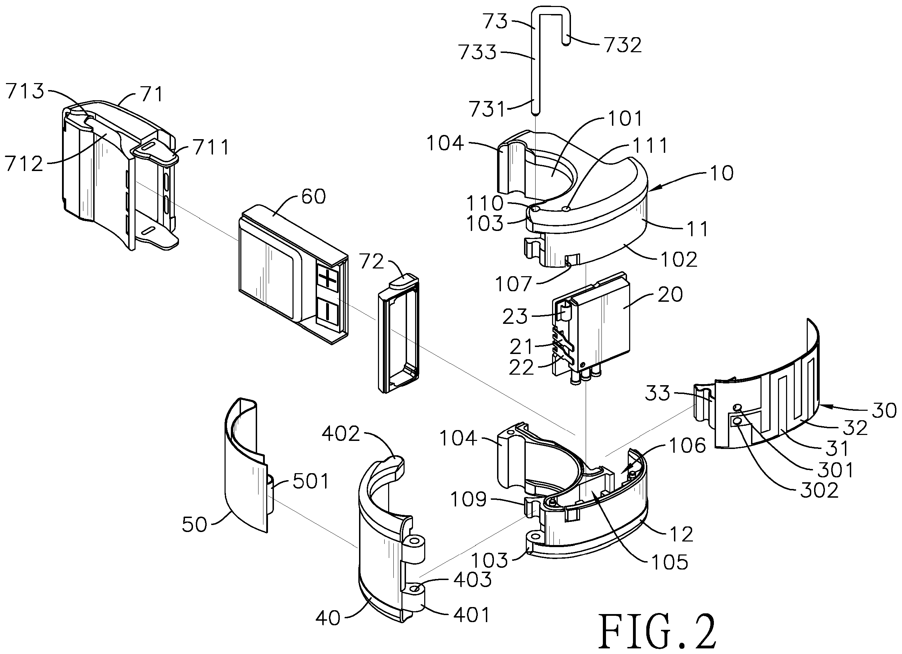

With reference to Figs. 1 and 2, a first embodiment of a wireless positioning bird leg band of the present invention has an outer antenna structure. The wireless positioning bird leg band includes an arc-shaped shell 10, a wireless positioning module 20, a flexible radiation unit 30, a movement unit 40, a flexible ground unit 50, and a conductive pivot 73.

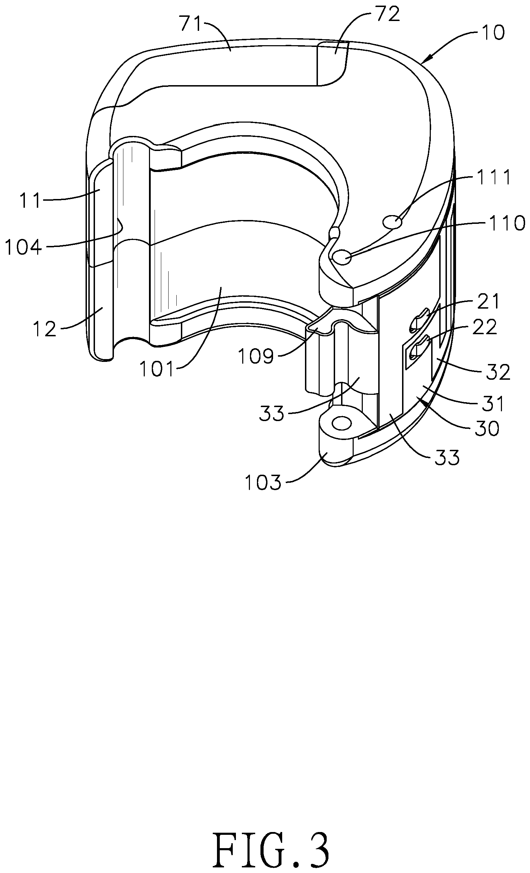

With reference to Figs. 2 and 3, the arc-shaped shell 10 includes a first terminal, a second terminal, an inner annular wall 101, and an outer annular wall 102. The first terminal is opposite to the second terminal. In the first embodiment, the arc-shaped shell 10 consists of a first half shell 11 and a second half shell 12. The first terminal of the arc-shaped shell 10 forms a first pivoting portion 103, and a portion of the inner annular wall 101 near the second terminal of the arc-shaped shell 10 forms a first engagement portion 104. In the first embodiment, the first engagement portion 104 is a concave portion. The arc-shaped shell 10 further includes an accommodating space 105 and a battery slot 106, and the accommodating space 105 communicates with the battery slot 106. A battery 60 is mounted in the battery slot 106.

The wireless positioning module 20 is mounted in the accommodating space 105, and includes a first conductive unit 21 and a second conductive unit 22. The first conductive unit 21 and the second conductive unit 22 extend out of the outer annular wall 102 of the arc-shaped shell 10 from the first terminal of the arc-shaped shell 10. In the first embodiment, an opening 107 is formed at the first terminal of the arc-shaped shell 10, and the first conductive unit 21 and the second conductive unit 22 extend out of the arc-shaped shell 10 through the opening 107. The flexible radiation unit 30 is mounted on the outer annular wall 102 of the arc-shaped shell 10. The flexible radiation unit 30 is electrically connected with the first conductive unit 21 and the second conductive unit 22. In the first embodiment, the first conductive unit 21 and the second conductive unit 22 are conductive terminals.

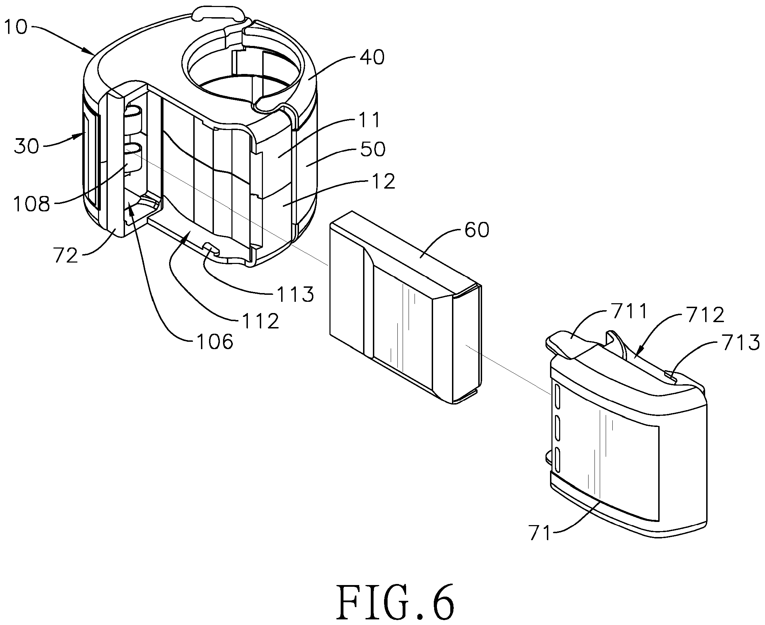

With reference to Figs. 2 and 6, the wireless positioning module 20 includes two battery contacts 108 extending to the battery slot 106. The battery 60 may be inserted into the battery slot 106 to be electrically connected to the battery contacts 108, and the wireless positioning module 20 may be electrically connected to the battery 60 through the battery contacts 108.

The battery slot 106 is covered by a battery lid 71. Specifically, the battery lid 71 includes an accommodating slot to receive the battery 60. In the first embodiment, a connection unit 72 is mounted between the battery slot 106 and the battery lid 71 to connect the battery lid 71 and the arc-shaped shell 10. The battery lid 71 includes a top portion and a bottom potion. The top portion and the bottom portion of the battery lid 71 each respectively form an extension portion 711 extending toward the battery slot 106. The extension portions 711 extend into the battery slot 106 through the connection unit 72 to be engaged with the arc-shaped shell 10. The connection unit 72 is made of Thermo Plastic Elastomer (TPE) or Thermoplastic Poly Urethane (TPU). Since the connection unit 72 is mounted between the battery slot 106 and the battery lid 71, and the battery lid 71 is engaged with the arc-shaped shell 10 through the connection unit 72, the battery slot 106 may be effectively sealed to protect the battery 60 for water-proof and dust-proof purposes.

In the first embodiment, the arc-shaped shell 10 and the battery lid 71 are made of plastic. The arc-shaped shell 10 includes a battery groove 112. The battery groove 112 communicates with the battery slot 106, and the battery groove 112 includes two inner walls. Each of the two inner walls of the battery groove 112 forms a positioning portion 113. In the first embodiment, the positioning portions 113 may be protrusion blocks. The top portion and the bottom portion of the battery lid 71 each respectively form a sliding groove 712. A terminal of each of the sliding grooves 712 forms a necking 713. When the battery lid 71 is mounted on the arc-shaped shell 10, the sliding groove 712 of the battery lid 71 is aimed at the positioning portion 113 of the battery groove 112, and the battery lid 71 is pushed into the battery slot 106 to slide the positioning portions 113 of the battery groove 112 into the sliding grooves 712 of the battery lid 71. When the positioning portions 113 approach the necking 713 of the battery lid 71, the battery lid 71 is further pushed to slide the positioning portion 113 into the necking 713 of the battery lid 71. Therefore, the battery lid 71 may be firmly fixed on the battery groove 112 to cover the battery slot 106. Since the battery lid 71 is closely mounted on the battery groove 112 and the battery slot 106, the battery slot 106 may be effectively sealed to protect the battery 60 for water-proof and dust-proof purposes.

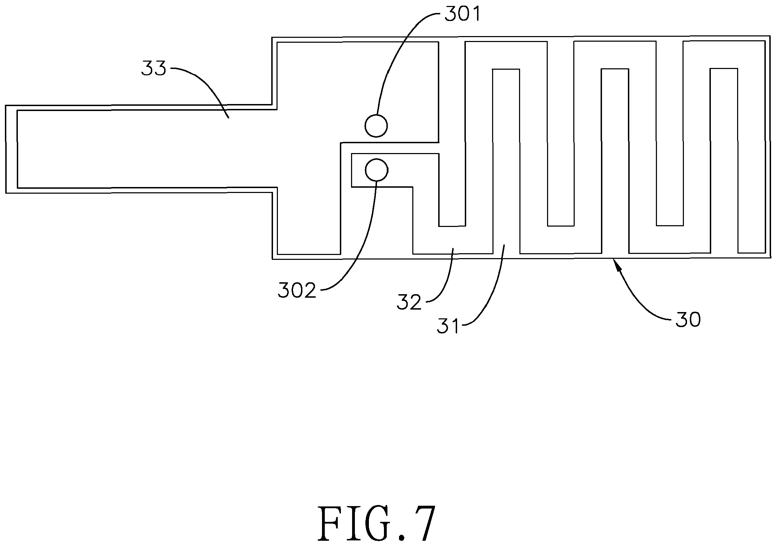

With reference to Figs. 3 and 7, the flexible radiation unit 30 includes a flexible substrate 31, an antenna portion 32, and a ground portion 33. The antenna portion 32 is mounted on a terminal of the flexible substrate 31, and the ground portion 33 is mounted on another terminal of the flexible substrate 31. A terminal of the antenna portion 32 is adjacent to a terminal of the ground portion 33, and is separated from the ground portion 33 by a gap. The antenna portion 32 and the ground portion 33 may each be a metal foil, such as a copper foil. The antenna portion 32 and the ground portion 33 are mounted on an outer wall of the flexible substrate 31. An inner wall of the flexible substrate 31 is stuck or welded on the outer annular wall 102 of the arc-shaped shell 10. The antenna portion 32 may be a zigzagging structure, but the structure of the antenna portion 32 is not limited thereto. The structure of the antenna portion 32 may be designed according to demand. A first through hole 301 is formed at the terminal of the ground portion 33 near the antenna portion 32, and a second through hole 302 is formed at the terminal of the antenna portion 32 near the ground portion 33. The first conductive unit 21 extends out of the first through hole 301, and is bent to contact the ground portion 33. The second conductive unit 22 extends out of the second through hole 302, and is bent to contact the antenna portion 32. In the first embodiment, the flexible substrate 31 is a Flexible Print circuit (FPC).

Portions of the inner annular wall 101 and the outer annular wall 102 that are proximal to the first terminal of the arc-shaped shell 10 form a bending portion 109. The bending portion 109 is formed on the middle of the first terminal of the arc-shaped shell 10. A terminal of the ground portion 33 and a terminal of the flexible substrate 31 are bent to be fitted with the bending portion 109, and to be adhered to or welded on a surface of the bending portion 109. The terminal of the ground portion 33 and the flexible substrate 31, which are fitted with the bending portion 109, further extend to the inner annular wall 101.

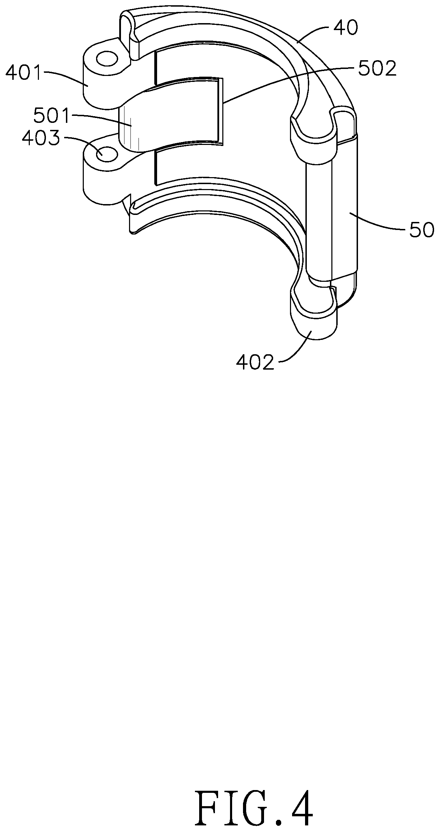

With reference to Figs. 2 and 4, the movement unit 40 includes a first terminal and a second terminal, and the first terminal is opposite to the second terminal. The first terminal of the movement unit 40 forms a second pivoting portion 401, and the second terminal of the movement unit 40 forms a second engagement portion 402. The second pivoting portion 401 selectively engages with the first engagement portion 104. In the first embodiment, the second engagement portion 402 is a convex portion, and the first engagement portion 104 is a concave portion to engage with the second engagement portion 402.

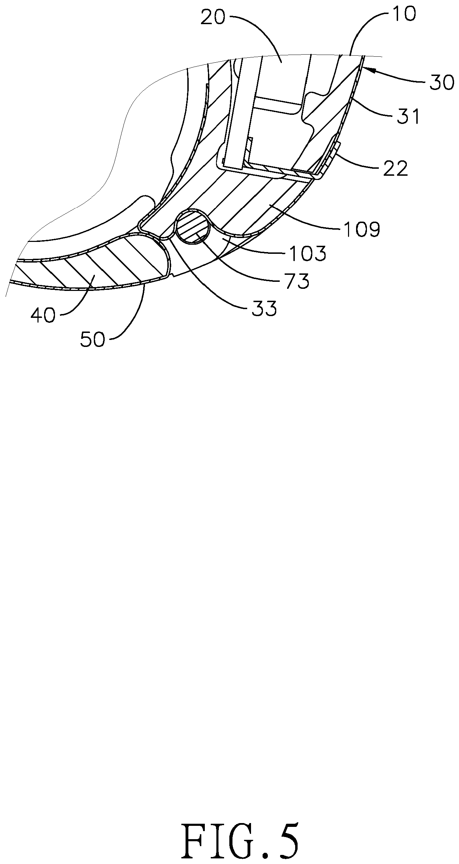

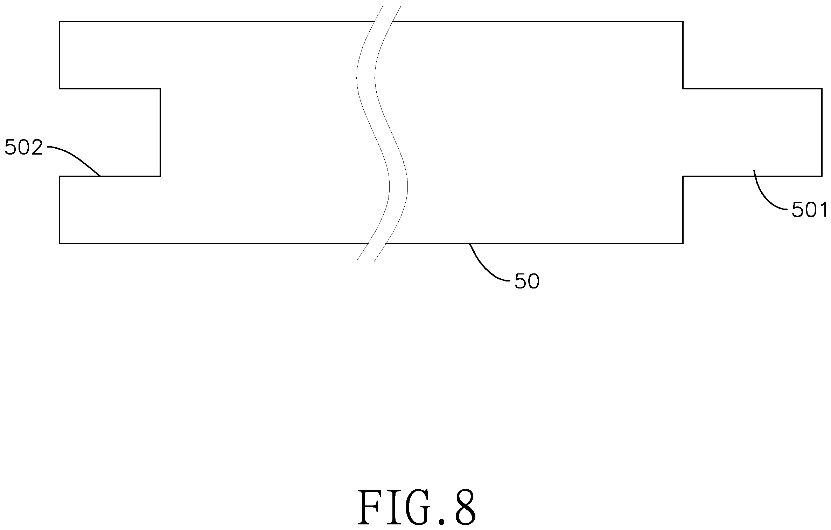

The flexible ground unit 50 is a metal foil, and the flexible ground unit 50 may be bent to be fitted on an inner surface and an outer surface of the movement unit 40. Therefore, the flexible ground unit 50 contacts the ground portion 33 of the flexible radiation unit 30 to be electrically connected to the ground portion 33. Further with reference to Fig. 8, the flexible ground unit 50 is unfolded to be flat. Two opposite terminals of the flexible ground unit 50 respectively form a convex portion 501 and a concave portion 502. The bent flexible ground unit 50 may be adhered or welded in such a way that the flexible ground unit 50 covers the inner surface and the outer surface of the movement unit 40. With reference to Figs. 4 and 5, when the flexible ground unit 50 is bent, the convex portion 501 is mounted on the middle of the first terminal of the movement unit 40, and engages with the concave portion 502. Further, the convex portion 501 contacts the ground portion 33 of the flexible radiation unit 30 to be electrically connected with the ground portion 33.

With reference to Figs. 2 and 3, the conductive pivot 73 is mounted through the first pivoting portion 103 and the second pivoting portion 401. The conductive pivot 73 includes a first terminal 731, a second terminal 732, and a middle portion 733 mounted between the first terminal 731 and the second terminal 732. The first terminal 731 and the second terminal 732 extend in a first direction. The first terminal 731 may be longer than the second terminal 732. A third through hole 110 and a fourth through hole 111 are formed at a top surface of the arc-shaped shell 10. The third through hole 110 is formed on the first pivoting portion 103, and the fourth through hole 111 communicates with the accommodating space 105. With reference to Fig. 4, a fifth through hole 403 is formed on the movement unit 40. The fifth through hole 403 is formed on the second pivoting portion 401. The first terminal 731 of the conductive pivot 73 is mounted through the third through hole 110 of the arc-shaped shell 10 and the fifth through hole 403 of the movement unit 40, and the middle portion 733 of the conductive pivot 73 contacts the ground portion 33 to be electrically connected to the ground portion 33. Therefore, the movement unit 40 and the arc-shaped shell 10 may pivot on the conductive pivot 73. The second terminal 732 of the conductive pivot 73 is mounted through the fourth through hole 111 to extend into the accommodating space 105. Therefore, the second terminal 732 of the conductive pivot 73 is electrically connected to the wireless positioning module 20, and the conductive pivot 73 may be fixed on the arc-shaped shell 10.

In the first embodiment, the wireless positioning module 20 includes a conductive connection unit 23. A free terminal of the conductive connection unit 23 is bent to form an insertion portion, and the second terminal 732 of the conductive pivot 73 is inserted into the insertion portion of the conductive connection unit 23 to be electrically connected to the wireless positioning module 20.

In the first embodiment, since the flexible ground unit 50 is electrically connected with the ground portion 33 of the flexible radiation unit 30, the flexible radiation unit 30 may have a greater grounding area to increase transmission capability of the wireless positioning module 20.

When the movement unit 40 is rotated to move the second engagement portion 402 out of the first engagement portion 104 of the arc-shaped shell 10, a bird leg may be easily put into the arc-shaped shell 10. Further, when the movement unit 40 is rotated to move the second engagement portion 402 that is engaged with the first engagement portion 104, the wireless positioning bird leg band may be mounted onto the bird leg.

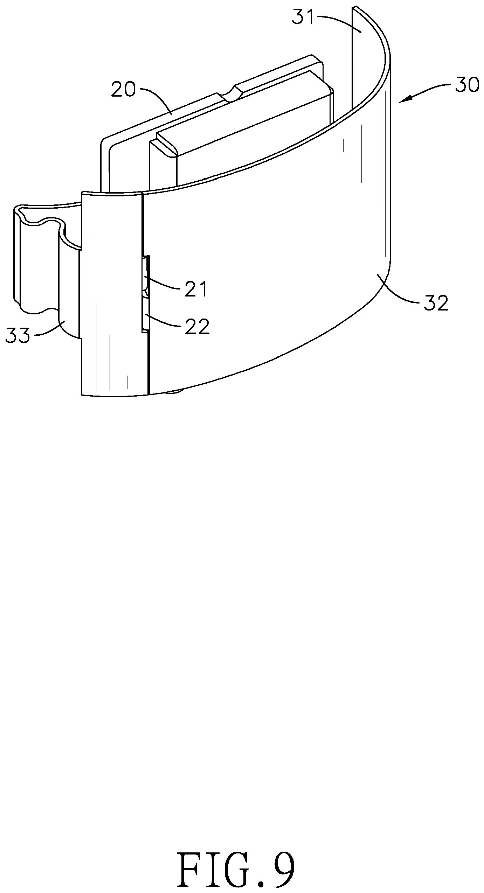

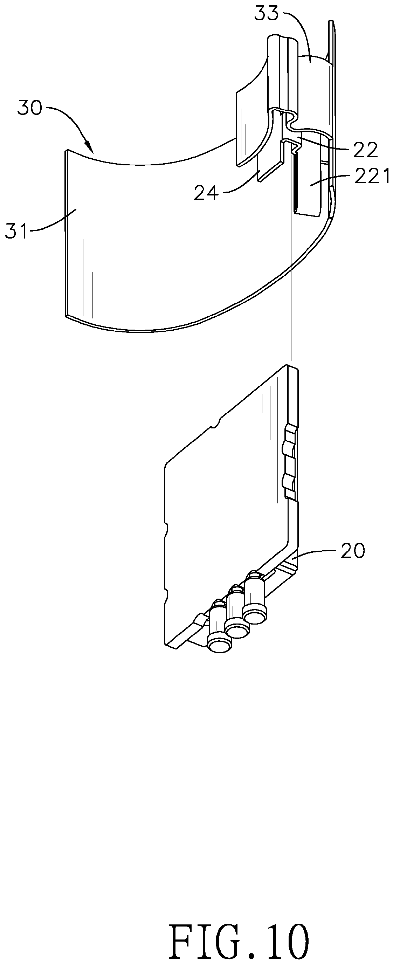

With reference to Figs. 9 and 10, a second embodiment of the present is shown. The second embodiment is similar with the first embodiment of the present invention. The second embodiment differs from the first embodiment in the first conductive unit 21, and the second conductive unit 22, and the flexible radiation unit 30. In the second embodiment, the first conductive unit 21, the second conductive unit 22 and the flexible radiation unit 30 are integrally formed.

With reference to Figs. 9 and 10, in the second embodiment, the first conductive unit 21 includes two opposite sections. One of the two opposite sections of the first conductive unit 21 is bent to form a first banding portion 211. The first banding portion 211 of the first conductive unit 21 and the ground portion 33 of the flexible radiation unit 30 are integrally formed. The second conductive unit 22 includes two opposite sections. One of the two opposite sections of the second conductive unit 22 is bent to form a second banding portion 221. The second banding portion 221 of the second conductive unit 22 and the antenna portion 32 of the flexible radiation unit 30 are integrally formed. Since the first conductive unit 21, the second conductive unit 22, and the flexible radiation unit 30 are integrally formed, radiation capability of the flexible radiation unit 30 may be improved.

In the second embodiment, the other one of the two opposite sections of the first conductive unit 21 and the other one of the two opposite sections of the second conductive unit 22 are connected to form a connection portion 24. The connection portion 24 is electrically connected with the wireless positioning module 20. Therefore, transmission distances of wireless signals of the wireless positioning bird leg band may be increased, and the radiation capability of the flexible radiation unit 30 may be further improved.

With reference to Figs. 9 and 10, a plan view of the first conductive unit 21, the second conductive unit 22, and the flexible radiation unit 30 is shown. The first conductive unit 21 and the second conductive unit 22 may be flexible print circuit (FPC) boards. The first conductive unit 21, the second conductive unit 22, and the flexible substrate 31 may be integrally formed. The first conductive unit 21 includes a metal foil, such as copper foil, and the metal foil of the first conductive unit 21 is electrically connected to the ground portion 33 and the wireless positioning module 20. Further, the second conductive unit 22 may include a metal foil, such as copper foil, and the metal foil of the second conductive unit 22 is electrically connected to the antenna portion 32 and the wireless positioning module 20. In the second embodiment, the antenna portion 32 is a sheet structure.

Since the flexible radiation unit 30 is mounted on the outer annular wall 102 of the arc-shaped shell 10 and the flexible ground unit 50 is mounted on the surface of the movement unit 40, the flexible radiation unit 30 and the flexible ground unit 50 are not shielded by the arc-shaped shell 10. Therefore, the wireless signals of the wireless positioning bird leg band are not shielded. Further, since the ground portion 33 of the flexible radiation unit 30 is electrically connected with the flexible ground unit 50, the flexible radiation unit 30 may have a greater grounding area to increase transmission capability of the wireless positioning module 20. The wireless positioning module 20 may successfully receive and transmit the wireless signals, and the transmission capability and transmission quality of the wireless positioning bird leg band may be improved.

Further, since the connection unit 72 is mounted between the battery lid 71 and the battery slot 106, the battery slot 106 may be effectively sealed to protect the battery 60 for water-proof and dust-proof purposes.

The flexible radiation unit 30 is mounted on the outer annular wall 102 of the arc-shaped shell 10, and the flexible ground unit 50 is mounted on the inner surface and the outer surface of the movement unit 40. Further, the ground portion 33 of the flexible radiation unit 30 is electrically connected with the flexible ground unit 50, and the flexible radiation unit 30 may have a greater grounding area to increase transmission capability of the wireless positioning module 20. Therefore, the wireless positioning module 20 may not need other radiation units, and the wireless positioning module 20 may have good transmission quality. Further, volume of the arc-shaped shell 10 may be decreased to reduce the weight load of birds, and cost of the wireless positioning bird leg band may also be decreased.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the scope of the invention as defined by the appended claims.

## Claims

1. A wireless positioning bird leg band having an outer antenna structure comprising:
an arc-shaped shell (10), comprising:
a first terminal, forming a first pivoting portion (103);
a second terminal, opposite to the first terminal;
an inner annular wall (101), wherein a portion of the inner annular wall (101) near the second terminal forms a first engagement portion (104);
an outer annular wall (102);
a battery slot (106); and
an accommodating space (105), communicating with the battery slot (106);
a wireless positioning module (20), mounted in the accommodating space (105), and comprising:
a first conductive unit (21), extending out of the outer annular wall (102) of the arc-shaped shell (10); and
a flexible radiation unit (30), mounted on the outer annular wall (102) of the arc-shaped shell (10), and comprising:
an antenna portion (32);
a movement unit (40), comprising:
a first terminal, forming a second pivoting portion (401); and
a second terminal, opposite to the first terminal of the movement unit (40), and forming a second engagement portion (402);
wherein the second pivoting portion (401) of the movement unit (40) connects to the first pivoting portion (103) of the arc-shaped shell (10) through a pin-connection;
wherein the second engagement portion (402) of the movement unit (40) selectively engages with the first engagement portion (104) of the arc-shaped shell (10);
a conductive pivot (73), comprising:
a first terminal (731), extending in a first direction;
a second terminal (732), extending in the first direction; and
a middle portion (733), mounted between the first terminal (731) and the second terminal (732) of the conductive pivot (73);
wherein the first pivoting portion (103) of the arc-shaped shell (10) and the second pivoting portion (401) of the movement unit (40) pivot to the first terminal (731) of the conductive pivot (73), and the middle portion (733) of the conductive pivot (73) is electrically connected to the flexible radiation unit (30);
wherein the second terminal (732) of the conductive pivot (73) extends into the arc-shaped shell (10) to be electrically connected to the wireless positioning module (20);
the wireless positioning bird leg band being **characterized in** further comprising:
a flexible ground unit (50), mounted on a surface of the movement unit (40);
**in that** the wireless positioning module (20) further comprises:
a second conductive unit (22), extending out of the outer annular wall (102) of the arc-shaped shell (10), and electrically connected to the antenna portion (32);
**in that** the flexible radiation unit (30) further comprises:
a ground portion (33), electrically connected to the first conductive unit (21); and
**in that** the flexible ground unit (50) is electrically connected with the ground portion (33) of the flexible radiation unit (30).

2. The wireless positioning bird leg band as claimed in claim 1, wherein:
an opening (107) is formed at the first terminal of the arc-shaped shell (10);
the first conductive unit (21) and the second conductive unit (22) extend out of the arc-shaped shell (10) through the opening (107).

3. The wireless positioning bird leg band as claimed in claim 2, wherein the flexible radiation unit (30) further comprises:
a flexible substrate (31), comprising an inner wall mounted on the outer annular wall (102) of the arc-shaped shell (10);
wherein the ground portion (33) is mounted on an outer wall of the flexible substrate (31), and proximal to a terminal of the flexible substrate (31);
wherein the antenna portion (32) is mounted on the outer wall of the flexible substrate (31), and proximal to another terminal of the flexible substrate (31) at a spaced interval;
wherein a terminal of the antenna portion (32) is adjacent to a terminal of the ground portion (33), and separated from the ground portion (33) by a gap;
wherein a first through hole (301) is formed at the terminal of the ground portion (33) that is proximal to the antenna portion (32), and a second through hole (302) is formed at the terminal of the antenna portion (32) that is proximal to the ground portion (33);
wherein the first conductive unit (21) extends out of the first through hole (301); wherein the second conductive unit (22) extends out of the second through hole (302).

4. The wireless positioning bird leg band as claimed in claim 3, wherein:
a terminal of the first conductive unit (21) extending out of the first through hole (301) is bent to contact the ground portion (33);
a terminal of the second conductive unit (22) extending out of the second through hole (302) is bent to contact the antenna portion (32).

5. The wireless positioning bird leg band as claimed in claim 2, wherein the flexible radiation unit (30) comprises:
a flexible substrate (31), comprising an inner wall mounted on the outer annular wall (102 of the arc-shaped shell (10);
wherein the ground portion (33) is mounted on an outer wall of the flexible substrate (31), and proximal to a terminal of the flexible substrate (31);
wherein the antenna portion (32) is mounted on the outer wall of the flexible substrate (31), and proximal to another terminal of the flexible substrate (31);
wherein a terminal of the antenna portion (32) is adjacent to a terminal of the ground portion (33), and separated from the ground portion (33) by a gap;
wherein the first conductive unit (21) and the ground portion (33) are integrally formed;
wherein the second conductive unit (22) and the antenna portion (32) are integrally formed.

6. The wireless positioning bird leg band as claimed in claim 5, wherein:
the first conductive unit (21) comprises two opposite sections;
one of the two opposite sections of the first conductive unit (21) is bent to form a first banding portion (211);
the first banding portion (211) of the first conductive unit (21) and the ground portion (33) of the flexible radiation unit (30) are integrally formed;
the second conductive unit (22) comprises two opposite sections;
one of the two opposite sections of the second conductive unit (22) is bent to form a second banding portion;
the second banding portion of the second conductive unit (22) and the antenna portion (32) of the flexible radiation unit (30) are integrally formed.

7. The wireless positioning bird leg band as claimed in claim 6, wherein:
the other one of the two opposite sections of the first conductive unit (21) and the other one of the two opposite sections of the second conductive unit (22) are connected to form a connection portion (24);
the connection portion (24) is electrically connected with the wireless positioning module (20).

8. The wireless positioning bird leg band as claimed in claim 4 or 7, wherein:
portions of the inner annular wall (101) and the outer annular wall (102) proximal to the first terminal of the arc-shaped shell (10) form a bending portion (109);
a terminal of the ground portion (33) and a terminal of the flexible substrate (31) are bent to be fitted with the bending portion (109), and to be mounted on a surface of the bending portion (109).

9. The wireless positioning bird leg band as claimed in claim 8, wherein:
the flexible ground unit (50) is bent to be fitted on an inner surface and an outer surface of the movement unit (40);
two opposite terminals of the flexible ground unit (50) respectively form a convex portion (501) and a concave portion (502);
the convex portion (501) is mounted on the middle of the first terminal of the movement unit (40), and engages with the concave portion (502);
the convex portion (501) contacts the ground portion (33) of the flexible radiation unit (30) to be electrically connected with the ground portion (33).

10. The wireless positioning bird leg band as claimed in claim 1, wherein:
the first terminal (731) of the conductive pivot (73) is longer than the second terminal (732) of the conductive pivot (73);
a third through hole (110) and a fourth through hole (111) are formed at a top surface of the arc-shaped shell (10);
the third through hole (110) is formed on the first pivoting portion (103) of the arc-shaped shell (10);
the fourth through hole (111) communicates with the accommodating space (105);
the wireless positioning module (20) includes a conductive connection unit (23);
a fifth through hole (403) is formed at the second pivoting portion (401) of the movement unit (40);
the first terminal (731) of the conductive pivot (73) is mounted through the third through hole (110) of the arc-shaped shell (10) and the fifth through hole (403) of the movement unit (40);
the middle portion (733) of the conductive pivot (73) contacts the ground portion (33) to be electrically connected to the ground portion (33);
the second terminal (732) of the conductive pivot (73) is mounted through the fourth through hole (111) to extend into the accommodating space (105), and electrically connected to the conductive connection unit (23) of the wireless positioning module (20).

11. The wireless positioning bird leg band as claimed in claim 1, further comprising:
a battery (60), mounted in the battery slot (106);
wherein the wireless positioning module (20) includes two battery contacts (108);
wherein the battery contacts (108) extend to the battery slot (106);
wherein the battery (60) is electrically connected to the battery contacts (108), and the wireless positioning module (20) is electrically connected to the battery (60) through the battery contacts (108).

12. The wireless positioning bird leg band as claimed in claim 11, further comprising:
a battery lid (71), covering the battery slot (106);
a connection unit (72), mounted between the battery slot (106) and the battery lid (71) to connect the battery lid (71) and the arc-shaped shell (10);
wherein the battery lid (71) comprises a top portion and a bottom portion;
wherein the top portion of the battery lid (71) forms an extension portion (711), and the bottom portion of the battery lid (71) forms another extension portion (711);
wherein the extension portions (711) extend into the battery slot (106) through the connection unit (72) to be engaged with the arc-shaped shell (10).

## Patentansprüche

1. Drahtloses Positionierungs-Vogelbeinband mit einer äußeren Antennenstruktur, umfassend:
eine bogenförmige Schale (10), umfassend:
einen ersten Anschluss, der einen ersten schwenkbaren Abschnitt (103) bildet;
einen zweiten Anschluss, der dem ersten Anschluss gegenüberliegt;
eine innere ringförmige Wand (101), wobei ein Abschnitt der inneren ringförmigen Wand (101) in der Nähe des zweiten Anschlusses einen ersten Eingriffsabschnitt (104) bildet;
eine äußere ringförmige Wand (102);
einen Batterieschlitz (106); und
einen Aufnahmeraum (105), der mit dem Batterieschlitz (106) kommuniziert;
ein drahtloses Positionierungsmodul (20), das in dem Aufnahmeraum (105) montiert ist und umfasst:
eine erste leitende Einheit (21), die sich aus der äußeren ringförmigen Wand (102) der bogenförmigen Schale (10) heraus erstreckt; und
eine flexible Strahlungseinheit (30), die an der äußeren ringförmigen Wand (102) der bogenförmigen Schale (10) montiert ist und umfasst
einen Antennenabschnitt (32);
eine Bewegungseinheit (40), umfassend:
einen ersten Anschluss, der einen zweiten schwenkbaren Abschnitt (401) bildet; und
einen zweiten Anschluss, gegenüber dem ersten Anschluss der Bewegungseinheit (40) und bildend einen zweiten Eingriffsabschnitt (402);
wobei der zweite Schwenkabschnitt (401) der Bewegungseinheit (40) mit dem ersten Schwenkabschnitt (103) der bogenförmigen Schale (10) über eine Stiftverbindung verbunden ist;
wobei der zweite Eingriffsabschnitt (402) der Bewegungseinheit (40) selektiv mit dem ersten Eingriffsabschnitt (104) der bogenförmigen Schale (10) in Eingriff steht;
einen leitfähigen Schwenker (73), umfassend:
einen ersten Anschluss (731), der sich in einer ersten Richtung erstreckt;
einen zweiten Anschluss (732), der sich in der ersten Richtung erstreckt; und
einen mittleren Abschnitt (733), der zwischen dem ersten Anschluss (731) und dem zweiten Anschluss (732) des leitfähigen Schwenkers (73) montiert ist;
wobei der erste Schwenkabschnitt (103) der bogenförmigen Schale (10) und der zweite Schwenkabschnitt (401) der Bewegungseinheit (40) zu dem ersten Anschluss (731) des leitfähigen Schwenkers (73) schwenken und der mittlere Abschnitt (733) des leitfähigen Schwenkers (73) elektrisch mit der flexiblen Strahlungseinheit (30) verbunden ist;
wobei sich der zweite Anschluss (732) des leitfähigen Schwenkers (73) in die bogenförmige Schale (10) erstreckt, um elektrisch mit dem drahtlosen Positionierungsmodul (20) verbunden zu sein;
wobei das drahtlose Positionierungs-Vogelbeinband **dadurch gekennzeichnet ist, dass** es ferner umfasst:
eine flexible Bodeneinheit (50), die auf einer Fläche der Bewegungseinheit (40) montiert ist;
dadurch, dass das drahtlose Positionierungsmodul (20) ferner umfasst:
eine zweite leitende Einheit (22), die sich aus der äußeren ringförmigen Wand (102) der bogenförmigen Schale (10) heraus erstreckt und elektrisch mit dem Antennenabschnitt (32) verbunden ist;
dadurch, dass die flexible Strahlungseinheit (30) ferner umfasst:
einen Erdungsabschnitt (33), der elektrisch mit der ersten leitenden Einheit (21) verbunden ist; und
dadurch, dass die flexible Erdungseinheit (50) elektrisch mit dem Erdungsabschnitt (33) der flexiblen Strahlungseinheit (30) verbunden ist.

2. Drahtlose Positionierungs-Vogelbeinband gemäß Anspruch 1, wobei:
eine Öffnung (107) an dem ersten Anschluss der bogenförmigen Schale (10) ausgebildet ist;
die erste leitende Einheit (21) und die zweite leitende Einheit (22) sich durch die Öffnung (107) aus der bogenförmigen Schale (10) heraus erstrecken.

3. Drahtlose Positionierungs-Vogelbeinband gemäß Anspruch 2, wobei die flexible Strahlungseinheit (30) ferner umfasst:
ein flexibles Substrat (31), das eine Innenwand umfasst, die an der äußeren ringförmigen Wand (102) der bogenförmigen Schale (10) montiert ist;
wobei der Erdungsabschnitt (33) an einer äußeren Wand des flexiblen Substrats (31) und proximal zu einem Anschluss des flexiblen Substrats (31) montiert ist;
wobei der Antennenabschnitt (32) an der äußeren Wand des flexiblen Substrats (31) und proximal zu einem anderen Anschluss des flexiblen Substrats (31) in einem beabstandeten Intervall montiert ist;
wobei ein Anschluss des Antennenabschnitts (32) an einen Anschluss des Erdungsabschnitts (33) angrenzt und von dem Erdungsabschnitt (33) durch einen Spalt getrennt ist;
wobei ein erstes Durchgangsloch (301) an dem Anschluss des Erdungsabschnitts (33) ausgebildet ist, der proximal zu dem Antennenabschnitt (32) ist, und ein zweites Durchgangsloch (302) an dem Anschluss des Antennenabschnitts (32) ausgebildet ist, der proximal zu dem Erdungsabschnitt (33) ist;
wobei sich die erste leitende Einheit (21) aus dem ersten Durchgangsloch (301) heraus erstreckt; wobei sich die zweite leitende Einheit (22) aus dem zweiten Durchgangsloch (302) heraus erstreckt.

4. Drahtlose Positionierungs-Vogelbeinband gemäß Anspruch 3, wobei:
ein Anschluss der ersten leitenden Einheit (21), der sich aus dem ersten Durchgangsloch (301) heraus erstreckt, gebogen ist, um den Erdungsabschnitt (33) zu kontaktieren;
ein Anschluss der zweiten leitfähigen Einheit (22), der sich aus dem zweiten Durchgangsloch (302) heraus erstreckt, gebogen ist, um den Antennenabschnitt (32) zu kontaktieren.

5. Drahtlose Positionierungs-Vogelbeinband gemäß Anspruch 2, wobei die flexible Strahlungseinheit (30) umfasst:
ein flexibles Substrat (31), das eine Innenwand umfasst, die an der äußeren ringförmigen Wand (102) der bogenförmigen Schale (10) montiert ist;
wobei der Erdungsabschnitt (33) an einer äußeren Wand des flexiblen Substrats (31) und proximal zu einem Anschluss des flexiblen Substrats (31) montiert ist;
wobei der Antennenabschnitt (32) an der äußeren Wand des flexiblen Substrats (31) und proximal zu einem anderen Anschluss des flexiblen Substrats (31) montiert ist;
wobei ein Anschluss des Antennenabschnitts (32) an einen Anschluss des Erdungsabschnitts (33) angrenzt und von dem Erdungsabschnitt (33) durch einen Spalt getrennt ist;
wobei die erste leitende Einheit (21) und der Erdungsabschnitt (33) integral ausgebildet sind;
wobei die zweite leitende Einheit (22) und der Antennenabschnitt (32) integral ausgebildet sind.

6. Drahtlose Positionierungs-Vogelbeinband gemäß Anspruch 5, wobei:
die erste leitende Einheit (21) zwei gegenüberliegende Abschnitte umfasst;
einer der beiden gegenüberliegenden Abschnitte der ersten leitfähigen Einheit (21) gebogen ist, um einen ersten Bandabschnitt (211) zu bilden;
der erste Bandabschnitt (211) der ersten leitfähigen Einheit (21) und der Erdungsabschnitt (33) der flexiblen Strahlungseinheit (30) integral ausgebildet sind;
die zweite leitende Einheit (22) zwei gegenüberliegende Abschnitte aufweist;
einer der zwei gegenüberliegenden Abschnitte der zweiten leitfähigen Einheit (22) gebogen ist, um einen zweiten Bandabschnitt zu bilden;
der zweite Bandabschnitt der zweiten leitenden Einheit (22) und der Antennenabschnitt (32) der flexiblen Strahlungseinheit (30) integral ausgebildet sind.

7. Drahtlose Positionierungs-Vogelbeinband gemäß Anspruch 6, wobei:
der andere der zwei gegenüberliegenden Abschnitte der ersten leitfähigen Einheit (21) und der andere eine der zwei gegenüberliegenden Abschnitte der zweiten leitfähigen Einheit (22) verbunden sind, um einen Verbindungsabschnitt (24) zu bilden;
der Verbindungsabschnitt (24) elektrisch mit dem drahtlosen Positionierungsmodul (20) verbunden ist.

8. Drahtlose Positionierungs-Vogelbeinband gemäß Anspruch 4 oder 7, wobei:
Abschnitte der inneren ringförmigen Wand (101) und der äußeren ringförmigen Wand (102) proximal zu dem ersten Anschluss der bogenförmigen Schale (10) einen Biegeabschnitt (109) bilden;
ein Anschluss des Erdungsabschnitts (33) und ein Anschluss des flexiblen Substrats (31) gebogen sind, um mit dem Biegeabschnitt (109) zusammenzupassen und um auf einer Fläche des Biegeabschnitts (109) montiert zu werden.

9. Drahtlose Positionierungs-Vogelbeinband gemäß Anspruch 8, wobei:
die flexible Erdungseinheit (50) gebogen ist, um an einer Innenfläche und einer Außenfläche der Bewegungseinheit (40) zusammenzupassen;
zwei gegenüberliegende Anschlüsse der flexiblen Bodeneinheit (50) jeweils einen konvexen Abschnitt (501) und einen konkaven Abschnitt (502) bilden;
der konvexe Abschnitt (501) auf der Mitte des ersten Anschlusses der Bewegungseinheit (40) montiert ist und mit dem konkaven Abschnitt (502) in Eingriff steht;
der konvexe Abschnitt (501) den Erdungsabschnitt (33) der flexiblen Strahlungseinheit (30) kontaktiert, um mit dem Erdungsabschnitt (33) elektrisch verbunden zu sein.

10. Drahtlose Positionierungs-Vogelbeinband gemäß Anspruch 1, wobei:
der erste Anschluss (731) des leitfähigen Schwenkers (73) länger als der zweite Anschluss (732) des leitfähigen Schwenkers (73) ist;
ein drittes Durchgangsloch (110) und ein viertes Durchgangsloch (111) an einer oberen Fläche der bogenförmigen Schale (10) ausgebildet sind;
das dritte Durchgangsloch (110) an dem ersten Schwenkabschnitt (103) der bogenförmigen Schale (10) ausgebildet ist;
das vierte Durchgangsloch (111) mit dem Aufnahmeraum (105) kommuniziert;
das drahtlose Positionierungsmodul (20) eine leitende Verbindungseinheit (23) einschließt;
ein fünftes Durchgangsloch (403) an dem zweiten Schwenkabschnitt (401) der Bewegungseinheit (40) ausgebildet ist;
der erste Anschluss (731) des leitfähigen Schwenkers (73) durch das dritte Durchgangsloch (110) der bogenförmigen Schale (10) und das fünfte Durchgangsloch (403) der Bewegungseinheit (40) montiert ist;
der mittlere Abschnitt (733) des leitfähigen Schwenkers (73) den Erdungsabschnitt (33) kontaktiert, um elektrisch mit dem Erdungsabschnitt (33) verbunden zu sein;
der zweite Anschluss (732) des leitfähigen Schwenkers (73) durch das vierte Durchgangsloch (111) montiert ist, um sich in den Aufnahmeraum (105) zu erstrecken, und elektrisch mit der leitfähigen Verbindungseinheit (23) des drahtlosen Positionierungsmoduls (20) verbunden ist.

11. Drahtlose Positionierungs-Vogelbeinband gemäß Anspruch 1, ferner umfassend
eine Batterie (60), die in dem Batterieschlitz (106) montiert ist;
wobei das drahtlose Positionierungsmodul (20) zwei Batteriekontakte (108) einschließt;
wobei sich die Batteriekontakte (108) bis zu dem Batterieschlitz (106) erstrecken;
wobei die Batterie (60) elektrisch mit den Batteriekontakten (108) verbunden ist und das drahtlose Positionierungsmodul (20) über die Batteriekontakte (108) elektrisch mit der Batterie (60) verbunden ist.

12. Drahtlose Positionierungs-Vogelbeinband gemäß Anspruch 11, ferner umfassend:
einen Batteriedeckel (71), der den Batterieschlitz (106) abdeckt;
eine Verbindungseinheit (72), die zwischen dem Batterieschlitz (106) und dem Batteriedeckel (71) montiert ist, um den Batteriedeckel (71) und die bogenförmige Schale (10) zu verbinden;
wobei der Batteriedeckel (71) einen oberen Abschnitt und einen unteren Abschnitt umfasst;
wobei der obere Abschnitt des Batteriedeckels (71) einen Verlängerungsabschnitt (711) bildet und der untere Abschnitt des Batteriedeckels (71) einen anderen Verlängerungsabschnitt (711) bildet;
wobei sich die Verlängerungsabschnitte (711) durch die Verbindungseinheit (72) in den Batterieschlitz (106) erstrecken, um mit der bogenförmigen Schale (10) in Eingriff gebracht zu sein.

## Revendications

1. Bague à fixer sur la patte d'un oiseau de positionnement sans fil ayant une structure d'antenne externe comprenant :
une coque en forme d'arc (10), comprenant :
une première borne, formant une première partie pivotante (103) ;
une deuxième borne, opposée à la première borne ;
une paroi annulaire intérieure (101), dans laquelle une partie de la paroi annulaire intérieure (101) près de la deuxième borne forme une première partie de mise en prise (104) ;
une paroi annulaire extérieure (102) ;
une fente de batterie (106) ; et
un espace de logement (105), communiquant avec la fente de batterie (106) ;
un module de positionnement sans fil (20), monté dans l'espace de logement (105), et comprenant :
une première unité conductrice (21), s'étendant hors de la paroi annulaire externe (102) de la coque en forme d'arc (10) ; et
une unité de rayonnement flexible (30), montée sur la paroi annulaire externe (102) de la coque en forme d'arc (10), et comprenant :
une partie d'antenne (32) ;
une unité de mouvement (40), comprenant :
une première borne, formant une deuxième partie pivotante (401) et
une deuxième borne, opposée à la première borne de l'unité de mouvement (40), et formant une deuxième partie de mise en prise (402) ;
dans laquelle la deuxième partie pivotante (401) de l'unité de mouvement (40) se connecte à la première partie pivotante (103) de la coque en forme d'arc (10) par une connexion à broche ;
dans laquelle la deuxième partie de mise en prise (402) de l'unité de mouvement (40) vient en prise sélectivement avec la première partie de mise en prise (104) de la coque en forme d'arc (10) ;
un pivot conducteur (73), comprenant :
une première borne (731), s'étendant dans une première direction ;
une deuxième borne (732), s'étendant dans la première direction ; et
une partie médiane (733), montée entre la première borne (731) et la deuxième borne (732) du pivot conducteur (73) ;
dans laquelle la première partie pivotante (103) de la coque en forme d'arc (10) et la deuxième partie pivotante (401) de l'unité de mouvement (40) pivotent vers la première borne (731) du pivot conducteur (73), et le la partie médiane (733) du pivot conducteur (73) est électriquement connectée à l'unité de rayonnement flexible (30) ;
dans laquelle la deuxième borne (732) du pivot conducteur (73) s'étend dans la coque en forme d'arc (10) pour être connectée électriquement au module de positionnement sans fil (20) ;
la bague à fixer sur la patte d'un oiseau de positionnement sans fil étant **caractérisée en ce qu'**elle comprend en outre :
une unité au sol flexible (50), montée sur une surface de l'unité de mouvement (40) ;
**en ce que** le module de positionnement sans fil (20) comprend en outre :
une deuxième unité conductrice (22), s'étendant hors de la paroi annulaire externe (102) de la coque en forme d'arc (10), et connectée électriquement à la partie d'antenne (32) ;
**en ce que** l'unité de rayonnement flexible (30) comprend en outre :
une partie de masse (33), connectée électriquement à la première unité conductrice (21) ; et
**en ce que** l'unité de masse flexible (50) est reliée électriquement à la partie de masse (33) de l'unité de rayonnement flexible (30).

2. Bague à fixer sur la patte d'un oiseau de positionnement sans fil selon la revendication 1, dans laquelle :
une ouverture (107) est formée à la première borne de la coque en forme d'arc (10) ;
la première unité conductrice (21) et la deuxième unité conductrice (22) s'étendent hors de la coque en forme d'arc (10) à travers l'ouverture (107).

3. Bague à fixer sur la patte d'un oiseau de positionnement sans fil selon la revendication 2, dans laquelle l'unité de rayonnement flexible (30) comprend en outre :
un substrat flexible (31), comprenant une paroi interne montée sur la paroi annulaire externe (102) de la coque en forme d'arc (10) ;
dans laquelle la partie de masse (33) est montée sur une paroi externe du substrat flexible (31) et proximale à une borne du substrat flexible (31) ;
dans laquelle la partie d'antenne (32) est montée sur la paroi externe du substrat flexible (31), et proximale à une autre borne du substrat flexible (31) à un intervalle espacé ;
dans laquelle une borne de la partie d'antenne (32) est adjacente à une partie de masse (33), et séparée de la partie de masse (33) par un interstice ;
dans laquelle un premier trou traversant (301) est formé au niveau de la borne de la partie de masse (33) qui est proximale à la partie d'antenne (32), et un deuxième trou traversant (302) est formé au niveau de la borne de la partie d'antenne (32) qui est proximale à la partie de masse (33) ;
dans laquelle la première unité conductrice (21) s'étend hors du premier trou traversant (301) ;
dans laquelle la deuxième unité conductrice (22) s'étend hors du deuxième trou traversant (302).

4. Bague à fixer sur la patte d'un oiseau de positionnement sans fil selon la revendication 3, dans laquelle :
une borne de la première unité conductrice (21) s'étendant hors du premier trou traversant (301) est pliée pour entrer en contact avec la partie de masse (33) ;
une borne de la deuxième unité conductrice (22) s'étendant hors du deuxième trou traversant (302) est pliée pour entrer en contact avec la partie d'antenne (32) .

5. Bague à fixer sur la patte d'un oiseau de positionnement sans fil selon la revendication 2, dans laquelle l'unité de rayonnement flexible (30) comprend :
un substrat flexible (31), comprenant une paroi interne montée sur la paroi annulaire externe (102) de la coque en forme d'arc (10) ;
dans laquelle la partie de masse (33) est montée sur une paroi externe du substrat flexible (31), et à proximité d'une borne du substrat flexible (31) ;
dans laquelle la partie d'antenne (32) est montée sur la paroi extérieure du substrat flexible (31), et à proximité d'une autre borne du substrat flexible (31) ;
dans laquelle une borne de la partie d'antenne (32) est adjacente à une borne de partie de masse (33), et séparée de la partie de masse (33) par un interstice ;
dans laquelle la première unité conductrice (21) et la partie de masse (33) sont formées en un seul tenant ;
dans laquelle la deuxième unité conductrice (22) et la partie d'antenne (32) sont formées en un seul tenant.

6. Bague à fixer sur la patte d'un oiseau de positionnement sans fil selon la revendication 5, dans laquelle :
la première unité conductrice (21) comprend deux sections opposées ;
une des deux sections opposées de la première unité conductrice (21) est pliée pour former une première partie de cerclage (211) ;
la première partie de cerclage (211) de la première unité conductrice (21) et la partie de masse (33) de l'unité de rayonnement flexible (30) sont formées en un seul tenant ;
la deuxième unité conductrice (22) comprend deux sections opposées ;
une des deux sections opposées de la deuxième unité conductrice (22) est pliée pour former une deuxième partie de cerclage ;
la deuxième partie de cerclage de la deuxième unité conductrice (22) et la partie d'antenne (32) de l'unité de rayonnement flexible (30) sont formées en un seul tenant.

7. Bague à fixer sur la patte d'un oiseau de positionnement sans fil selon la revendication 6, dans laquelle :
l'autre des deux sections opposées de la première unité conductrice (21) et l'autre des deux sections opposées de la deuxième unité conductrice (22) sont connectées pour former une portion de connexion (24) ;
la partie de connexion (24) est connectée électriquement au module de positionnement sans fil (20) .

8. Bague à fixer sur la patte d'un oiseau de positionnement sans fil selon la revendication 4 ou 7, dans laquelle :
des parties de la paroi annulaire interne (101) et de la paroi annulaire externe (102) proximales à la première borne de la coque en forme d'arc (10) forment une partie de flexion (109) ;
une borne de la partie de masse (33) et une borne du substrat flexible (31) sont pliées pour être équipées de la partie de flexion (109), et pour être montées sur une surface de la partie de flexion (109).

9. Bague à fixer sur la patte d'un oiseau de positionnement sans fil selon la revendication 8, dans laquelle :
l'unité de sol flexible (50) est pliée pour être montée sur une surface intérieure et une surface extérieure de l'unité de mouvement (40) ;
deux bornes opposées de l'unité de masse flexible (50) forment respectivement une partie convexe (501) et une partie concave (502) ;
la partie convexe (501) est montée au milieu de la première borne de l'unité de mouvement (40), et vient en prise avec la partie concave (502) ;
la partie convexe (501) est en contact avec la partie de masse (33) de l'unité de rayonnement flexible (30) pour être reliée électriquement à la partie de masse (33) .

10. Bague à fixer sur la patte d'un oiseau de positionnement sans fil selon la revendication 1, dans laquelle :
la première borne (731) du pivot conducteur (73) est plus longue que la deuxième borne (732) du pivot conducteur (73) ;
un troisième trou traversant (110) et un quatrième trou traversant (111) sont formés au niveau d'une surface supérieure de la coque en forme d'arc (10) ;
le troisième trou traversant (110) est formé sur la première partie pivotante (103) de la coque en forme d'arc (10) ;
le quatrième trou traversant (111) communique avec l'espace de logement (105) ;
le module de positionnement sans fil (20) comprend une unité de connexion conductrice (23) ;
un cinquième trou traversant (403) est formé au niveau de la deuxième partie pivotante (401) de l'unité de mouvement (40) ;
la première borne (731) du pivot conducteur (73) est montée à travers le troisième trou traversant (110) de la coque en forme d'arc (10) et le cinquième trou traversant (403) de l'unité de mouvement (40) ;
la partie médiane (733) du pivot conducteur (73) est en contact avec la partie de masse (33) pour être connectée électriquement à la partie de masse (33) ;
la deuxième borne (732) du pivot conducteur (73) est montée à travers le quatrième trou traversant (111) pour s'étendre dans l'espace de réception (105), et connectée électriquement à l'unité de connexion conductrice (23) du module de positionnement sans fil (20) .

11. Bague à fixer sur la patte d'un oiseau de positionnement sans fil selon la revendication 1, comprenant en outre :
une batterie (60), montée dans la fente de batterie (106) ;
dans laquelle le module de positionnement sans fil (20) comprend deux contacts de batterie (108) ;
dans laquelle les contacts de batterie (108) s'étendent jusqu'à la fente de batterie (106) ;
dans laquelle la batterie (60) est connectée électriquement aux contacts de batterie (108), et le module de positionnement sans fil (20) est connecté électriquement à la batterie (60) via les contacts de batterie (108).

12. Bague à fixer sur la patte d'un oiseau de positionnement sans fil selon la revendication 11, comprenant en outre :
un couvercle de batterie (71), recouvrant la fente de batterie (106) ;
une unité de connexion (72), montée entre la fente de batterie (106) et le couvercle de batterie (71) pour connecter le couvercle de batterie (71) et la coque en forme d'arc (10) ;
dans laquelle le couvercle de batterie (71) comprend une partie supérieure et une partie inférieure ;
dans laquelle la partie supérieure du couvercle de batterie (71) forme une partie d'extension (711), et la partie inférieure du couvercle de batterie (71) forme une autre partie d'extension (711) ;
dans laquelle les parties d'extension (711) s'étendent dans la fente de batterie (106) à travers l'unité de connexion (72) pour être mises en prise avec la coque en forme d'arc (10).
